# EUROPEAN PATENT SPECIFICATION

(11) **EP 3 242 858 B1**
(45) Date of publication and mention of the grant of the patent: **06.03.2019**
(21) Application number: 16700293.0
(22) Date of filing: 07.01.2016
(51) Int. Cl.: C02F 1/44

(54) **METHOD AND SYSTEM FOR SOLAR DRIVEN OSMOTIC WATER PURIFICATION**
VERFAHREN UND SYSTEM FÜR SOLAR ANGETRIEBENE OSMOTISCHE WASSERREINIGUNG
PROCÉDÉ ET SYSTÈME DE PURIFICATION D'EAU OSMOTIQUE FONCTIONNANT À L'ÉNERGIE SOLAIRE

(30) Priority: 08.01.2015 EP 15150489
(43) Date of publication of application: 15.11.2017
(73) Proprietor: VITO NV (Vlaamse Instelling voor Technologisch Onderzoek NV), 2400 Mol (BE)
(72) Inventor: HELSEN, Joost, B-2400 Mol (BE)
(74) Representative: Pronovem
(86) International application number: PCT/EP2016/050194
(87) International publication number: WO 2016/110529

(56) References cited:
- EP-A1- 2 617 480
- GB-A- 2 469 494

## Description

### Field of the Invention

The present invention relates to a method for purifying water, a related system and the use thereof

More particularly, the present invention relates to a method for solar driven osmotic water purification, a related system and the use thereof.

### Background of the Invention

Forward osmosis refers to a phenomenon wherein water moves from a lower solute concentration solution to a solution of a higher solute concentration by osmotic pressure. Reverse osmosis is a method of artificially applying pressure to move water in the opposite direction.

Desalination through reverse osmosis is a known technique in the field of water treatment. However, reverse osmosis desalination involves artificially applying a relatively high pressure and thus entails very high energy consumption.

To increase energy efficiency, a forward osmosis process using the principle of osmotic pressure has already been described in the art for desalination processes. For example, US 2012/0228222 discloses separation processes using forward osmosis generally involving the extraction of a solvent from a first solution to concentrate a solute therein by using a second concentrated solution to draw the solvent from the first solution across a semi-permeable membrane. The first solution can comprise waste water. The various species of solute within the second solution can be recovered and recycled through the process to affect the changes in equilibrium and eliminate waste products. Enhanced efficiency may result from using low grade waste heat from industrial or commercial sources.

WO 02/060825 describes an energy efficient desalination process (not producing waste products) involving the extraction of water from a first solution, such as seawater, by using a second concentrated solution to draw the water from the first solution across a semi-permeable membrane.

Furthermore, in the art, improved systems and processes for forward osmosis water purification or desalination are disclosed. For example, WO 2012/148864 provides a process for purifying contaminated water wherein a contaminated feed solution stream comprising water and with a first osmotic pressure is passed through a semipermeable membrane to a draw side having a draw solution stream with a second osmotic pressure on a draw side of the semipermeable membrane. The diluted draw solution stream is heated, agglomerated and cooled to produce a cooled single phase water rich stream that is purified to produce a water product stream.

WO 2012/081747 discloses a forward-osmosis, continuous-process, water-treatment system and method capable of providing drinking water production technology.

As a solute for the osmosis draw solution, ammonium bicarbonate, sulfur dioxide, aliphatic alcohols, aluminum sulfate, glucose, fructose, potassium nitrate, and the like have been used in the art. Also thermosensitive copolymers are described for use as draw solute in forward osmosis water treatment devices and methods, as for example disclosed in EP 2 641 927.

Although the processes and systems already known in the art aim at increasing energy efficiency, a major drawback is that they still do demand a relatively high energy consumption.

### Aims of the Invention

Aspects of the present invention envisage providing an improved method of water treatment and a related system, which overcome the disadvantages of prior art methods and systems.

More particularly, it is envisaged to provide a method and a related system for producing purified water with very low energy consumption.

### Summary of the Invention

According to aspects of the invention, there is therefore provided a method for purifying water, as set out in the appended claims.

According to other aspects of the invention, there is provided a system for purifying water, as set out in the appended claims.

According to other aspects of the invention, there is provided the use of the system of the invention, as set out in the appended claims.

Advantageous aspects of the present invention are set out in the dependent claims.

### Short Description of the Drawings

Aspects of the invention will be described in more detail with reference to the appended drawings, wherein same reference numerals illustrate same features. In the drawings, not all alternatives and options are shown and therefore the invention is not limited to the content of the given drawings.
**Figure 1** schematically represents a system (1) according to an aspect of the present invention, for purifying water.
**Figure 2** schematically represents a system (1) as illustrated in **figure 1****,** further including reference signs representing the different temperatures in the system.

### Description of the Invention

According to an aspect of the invention, there is provided a system for water purification (or a system for purifying water).

More particularly, there is provided a system for purifying water from a stream of (contaminated) feed solution (comprising water).

The system of the present invention uses forward osmosis to increase solar panel efficiency, for purifying water.

More particularly, the system of the invention is using forward osmosis to achieve an efficient production of electricity provided by solar panels, for water purification.

The system of the present invention can thus be used for purifying water while (at the same time) increasing solar panel efficiency.

In the context of the present invention, increasing solar panel efficiency refers to increasing the photoelectrical conversion efficiency of the panel, and thus increasing the output electrical power of the panel.

In the present invention, solar panel efficiency is increased while the produced heat by the solar panel is further used for purifying water.

In the context of the present invention, a solar panel refers to a photovoltaic panel, in the present description also being denoted as PV panel.

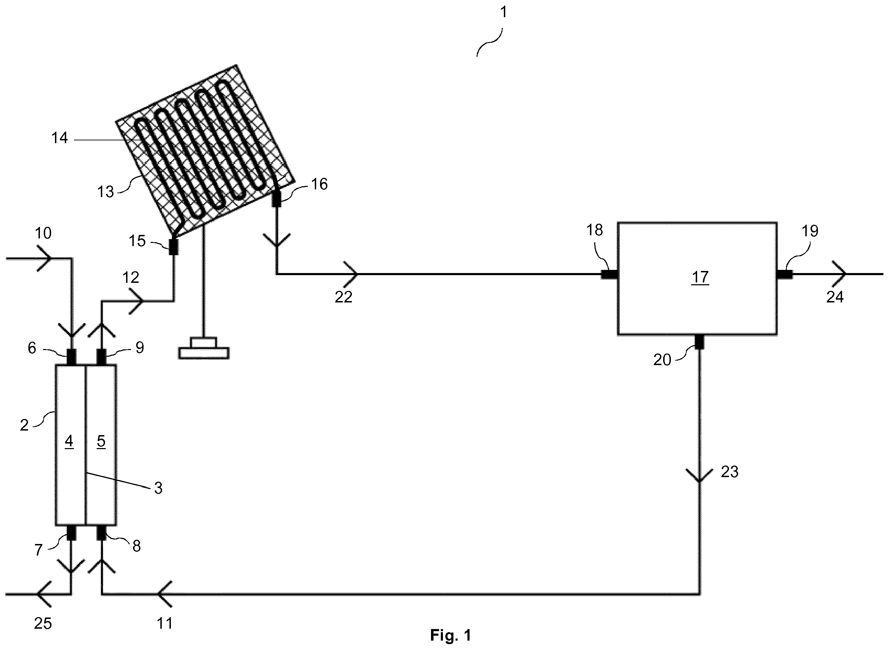

As illustrated schematically in **figure 1****,** a system (1) according to the present invention comprises (or consists of) a forward osmosis unit (2) comprising (or consisting of) a semipermeable membrane (3) comprising a feed side (4) and a draw side (5), said feed and draw side (4,5) having an inlet (6,8) and an outlet (7,9), said feed side (4) being configured for receiving a feed solution stream (10) comprising water (through the feed side inlet (6)), said draw side (5) being configured for receiving a draw solution stream (11) comprising a draw solute (through the draw side inlet (8)), wherein the semipermeable membrane (3) is configured to pass water from the feed solution stream (10) to the draw side (5) to produce (in draw side (5)) a diluted draw solution stream (12) (capable of exiting unit (2) through draw side outlet (9));
characterized in that the system (1) comprises at least one solar panel (13) comprising a heat exchange tubing system (14), said tubing system (14) having an inlet (15) and an outlet (16), said inlet (15) being in communication with the draw side outlet (9) of the forward osmosis unit (2), the heat exchange tubing system (14) being configured for cooling down the ((elevated or high) temperature of the) solar panel (13) and heating the diluted draw solution stream (12) passing through the heat exchange tubing system (14) so as to form a heated draw solution stream (22) (capable of exiting heat exchange tubing system (14) through outlet (16)); and a separation unit (17) being configured for separating the stream of heated draw solution (22) passing through the separation unit (17) (into a stream of purified water (24) and a stream of recovered draw solution (23)), said separation unit (17) having an inlet (18) and a first and second outlet (19,20), the separation unit inlet (18) being in communication with the heat exchange tubing system outlet (16), the separation unit first outlet (19) being configured for exiting a stream of purified water (24) from the system (1), the separation unit second outlet (20) being in communication with the draw side inlet (8) of the forward osmosis unit (2) in order to recycle a stream of recovered draw solution (23) (back into to the draw side (5) of the semipermeable membrane (3) through said draw side inlet (8)), said stream (23) being separated from the purified water in separation unit (17).

It has been found that a system (1) of the present invention improves the solar energy (both photovoltaic and thermo) utilization rate together with water production efficiency (compared to known systems in the art).

In the context of the present invention, the wording 'being in communication with' refers to 'being connected to', 'being coupled to', 'being in fluid communication', or, 'being in fluid connection', so as to allow fluids to circulate in (through) the system.

The forward osmosis unit (2) is provided for transporting water from the environment through a semipermeable membrane (3) by osmotic pressure.

A suitable semipermeable membrane (3) for use in the forward osmosis unit (2) of system (1) of the invention will be apparent for those skilled in the art.

The feed side (4) of forward osmosis unit (2) is configured for receiving a feed solution stream (10) comprising water (through the feed side inlet (6)) and having a first osmotic pressure.

The draw side (5) of forward osmosis unit (2) is configured for receiving a draw solution stream (11) comprising a draw solute (through the draw side inlet (8)) and having a second osmotic pressure.

Advantageously, the second osmotic pressure is higher than the first osmotic pressure.

Advantageously, the feed solution stream (10) comprises (contaminated) water from nature.

More advantageously, the feed solution stream (10) comprises (contaminated) water from any surface water or ground water.

Even more advantageously, the feed solution stream (10) comprises (contaminated) water from a sea, lake, river, channel, solar pond, reservoir, underground, or waste water.

The draw solution comprising the draw solute is being circulated in (through) the system (1) of the invention.

Advantageously, the draw solution comprising the draw solute is being circulated through a hydraulic circuit comprising tubes and at least one pump.

More advantageously, the system (1) comprises at least one pump being adapted for pumping the draw solution comprising the draw solute through the system (1) (allowing the draw solution to circulate in (through) the system (1)).

Alternatively, the at least one solar panel (13) itself provides a source of electrical energy for pumping the draw solution comprising the draw solute through the system (1) (allowing the draw solution to circulate in (through) the system (1)).

Advantageously, the draw solute in the draw solution stream (11) comprises a temperature sensitive hydrogel (or temperature sensitive copolymer).

In the context of the present invention, a temperature sensitive hydrogel refers to a thermosensitive hydrogel or a temperature responsive hydrogel. In other words, depending on the temperature of the solution comprising the hydrogel (being mixed with water in the solution), the hydrogel is (partially) hydrophilic (being (partially) dissolved in water) or (partially) hydrophobic (being (partially) un-dissolved in water) (i.e. depending on the temperature of the solution comprising the hydrogel, the hydrogel is hydrophilic or hydrophobic to some extent).

More specifically, increasing the temperature of the solution comprising the hydrogel to 30°C or above, the hydrogel becomes more hydrophobic (i.e. changes from being hydrophilic to become more hydrophobic).

More advantageously, the hydrogel is a polyaminoacid derivative.

Even more advantageously, the hydrogel comprises poly(*N*-iso-propylacrylamide) (PNIPAAm), Poly(*N*,*N*-diethylacrylamide) (PDEAAm), or a combination thereof.

Advantageously, the system (1) comprises one, two, three, or more solar panel(s) (13).

Advantageously, the heat exchange tubing system (14) is attached underneath the at least one solar panel (13).

In other words, in the invention, the heat exchange tubing system (14) is attached to the back side (i.e. the back or non-illuminated surface) of the solar panel (13), the heat exchange tubing system (14) being in contact with the (back side of the) solar panel (13).

In the present invention, the heat exchange tubing system (14) is configured for exchanging heat (due to thermal conductivity) between the solar panel and the diluted draw solution stream (12) passing through the heat exchange tubing system (14).

More particularly, the heat exchange tubing system (14) serves as a cooling system for cooling down the ((elevated or high) temperature of the) solar panel (13) and heating the diluted draw solution stream (12) passing through the heat exchange tubing system (14) so as to form a heated draw solution stream (22).

Cooling down the ((elevated or high) temperature of the) solar panel (13) increases the photoelectrical conversion efficiency of the panel, and thus increases the output electrical power of the panel.

Advantageously, the heat exchange tubing system (14) comprises thermally-conductive metal tubes (or piping) attached to the back side of the solar panel (13).

Advantageously, the separation unit (17) comprises a means for settling, or a microfiltration membrane, a nanofiltration membrane, or an ultrafiltration membrane (for separating (filtering) the stream of heated draw solution (22) passing through the separation unit (17) into a stream of purified water (24) and a stream of recovered draw solution (23)).

Advantageously, a means for settling comprises a settling tank, a plate separator, or the like.

More advantageously, the separation unit (17) comprises an ultrafiltration membrane.

Alternatively, the separation unit (17) comprises a means for further heating the stream of heated draw solution (22) so as to evaporate (or vaporize) water from said stream (22) passing through the separation unit (17) (for separating said stream (22) into a stream of purified water (24) and a stream of recovered draw solution (23)).

Advantageously, said means for further heating the stream of heated draw solution (22) comprises a heat pump or another solar panel (further to the at least one solar panel (13) already provided in the system (1)).

Alternatively, the at least one solar panel (13) itself provides a source of thermal and/or electrical energy so as to evaporate (or vaporize) water from the stream of heated draw solution (22) passing through the separation unit (17) (for separating said stream (22) into a stream of purified water (24) and a stream of recovered draw solution (23)).

According to an aspect of the present invention, a system (1) schematically illustrated in **figure 1** can be used for purifying water. More particularly, system (1) can be used for solar driven osmotic water purification.

The system (1) can be used for increasing solar panel efficiency and (at the same time) for water purification.

More particularly, the system (1) of the present invention can be used for linking an efficient production of electricity provided by solar panels to (osmotic) water purification.

More particularly, a system (1) of the present invention can be used for improving the solar energy (both photovoltaic and thermo) utilization rate together with water production efficiency.

Due to solar irradiation, photovoltaic panels (or solar panels) convert the sun's electromagnetic radiation into electricity and into heat. Without cooling system, the electricity production efficiency (or photoelectric conversion efficiency) from the solar panel decreases from 14% to around 9%, most of the solar radiation thus being converted into heat, resulting in high (or elevated) temperature of the solar panel and low efficiency.

The system (1) of the present invention, however, couples forward osmosis to cooling down a solar panel (by heat exchange) resulting in solar panels producing higher electrical output (compared to conventional solar panels without being cooled), while the exchange of a large amount of thermal energy (produced during cooling of the PV panel) between the solar panel and the heat exchange tubing system (14) attached to it, is further used for purifying water.

The system (1) can be used in fields involving water-treatment processing of all types including waste water, groundwater, seawater desalination, and the like.

Advantageously, a system (1) of the present invention can be used for recovering purified water from a stream of (contaminated) feed solution comprising water, with very low energy consumption.

More advantageously, a system (1) of the present invention can be used for producing potable water. In other words, the system (1) is capable of providing drinking water.

More advantageously, a system (1) of the present invention can be used for producing potable water with very low energy consumption (compared to existing systems and methods known in the art).

More advantageously, a system (1) of the present invention can be used as a stand-alone system or a semi-stand-alone system.

More advantageously, a system (1) of the present invention can be used for producing potable water, even in remote areas desalination.

According to an aspect of the invention, there is provided a method for purifying water.

More particularly, there is provided a method for purifying water from a stream of (contaminated) feed solution (comprising water).

The method of the present invention uses forward osmosis to increase solar panel efficiency, for purifying water.

More particularly, the method of the invention is using forward osmosis to achieve an efficient production of electricity provided by solar panels, for purifying water.

The method of the invention can thus be used for purifying water while (at the same time) increasing solar panel efficiency.

A method of the invention comprises:
- providing a feed solution stream (10) comprising water, having a first osmotic pressure and a (first) temperature T₁ on a feed side (4) of a semipermeable membrane (3);
- providing a draw solution stream (11) comprising a draw solute, having a second osmotic pressure and a (second) temperature T₂ on a draw side (5) of the semipermeable membrane (3), the second osmotic pressure being higher than the first osmotic pressure;
- passing (purified) water through the semipermeable membrane (3) to the draw side (5) so as to mix (or combine) the (purified) water with the draw solution stream (11) to produce a diluted draw solution stream (12) having a (third) temperature T₃;
   characterized in that
- the temperature T₂ of the (influent) draw solution stream (11) is higher than the temperature T₁ of the (influent) feed solution stream (10), such that the temperature T₃ of the diluted draw solution stream (12) is lower than temperature T₂;
- at least one solar panel (13) is provided, said solar panel (13) comprising a heat exchange tubing system (14) being in communication with the draw side (5) and said solar panel (13) having a (fourth) temperature T₄ being higher than the temperature T₃;
- the diluted draw solution stream (12) is passed into the heat exchange tubing system (14) such that the solar panel (13) is cooled down to a (fifth) temperature T₅ and the diluted draw solution stream (12) is heated, thereby forming a heated draw solution stream (22) having a (sixth) temperature T₆;
- the heated draw solution stream (22) is passed into a separation unit (17) such that said stream (22) is separated into a stream of purified water (24) and a stream of recovered draw solution (23) (said stream (23) having the temperature T₂);
- the stream of recovered draw solution (23) is passed to the draw side (5) of the semipermeable membrane (3) to be recycled.

According to a method of the invention and referring to **figure 1****,** a draw solution stream (11) comprising a draw solute is provided through draw side inlet (8) and is being circulated in system (1). A (contaminated) feed solution stream (10) comprising water is provided through feed side inlet (6).

Advantageously, the feed solution stream (10) comprises (contaminated) water from nature.

More advantageously, the feed solution stream (10) comprises (contaminated) water from any surface water or ground water.

Even more advantageously, the feed solution stream (10) comprises (contaminated) water from a sea, lake, river, channel, solar pond, reservoir, underground, or waste water.

Water coming from the feed solution stream (10) is driven from the environment (at the feed side (4) of a semipermeable membrane (3)) through the semipermeable membrane (3) by (high) osmotic pressure (through forward osmosis). Pollutants present in the stream of feed solution (10) are rejected by the semipermeable membrane (3) and only pure (or purified, or filtered) water goes through the membrane (3). The high osmotic pressure in the draw solution (11) is the driving force enabling the transport of pure water (from the feed side (4)) through the semipermeable membrane (3) (to the draw side (5)).

In the method of the invention, the second osmotic pressure (of the draw solution stream (11) comprising the draw solute) is higher than the first osmotic pressure (of the feed solution stream (10) comprising water), the value of the first and second osmotic pressure depending on the (type of) feed solution stream (10).

The filtered water becomes (or is) mixed (or combined) with the draw solution (11) at the draw side (5) of the semipermeable membrane (3).

A suitable semipermeable membrane (3) for use in the method of the invention will be apparent for those skilled in the art.

In the context of the present invention, mixing the filtered (purified) water (coming from the feed side (4) through the semipermeable membrane (3) to the draw side (5)) with the draw solution stream (11) refers to combining said two streams together, thereby producing (forming) a (one) diluted draw solution stream (12).

In the context of the present invention, diluted draw solution stream (12) refers to a stream (12) having a decreased draw solute concentration compared to the draw solute concentration of the (influent) draw solution stream (11), due to the mixing (combining) of said (influent) draw solution stream (11) with purified water.

In a method of the invention, heat is exchanged between the filtered (purified) water and the draw solution stream (11) during the mixing (or combining) of the filtered (or purified) water with said stream (11). Conductive heat transfer through the forward osmosis membrane (3) also contributes to cooling down of the draw solution (11).

In a method of the invention, the forward osmosis unit (2) illustrated in **figure 1** thus serves as a water purifier and a heat exchanger.

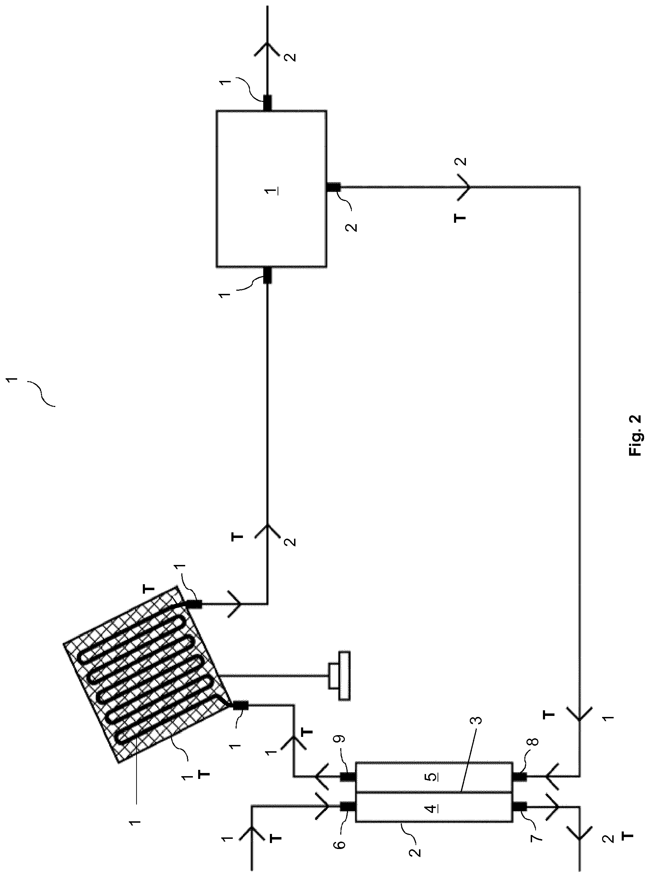

Reference signs representing the different temperatures in the system are shown in **figure 2** (in addition to the reference signs already shown in **figure 1****).**

Advantageously, the temperature T₁ of the (influent) feed solution stream (10) is comprised between (about) 0°C and (about) 50°C.

In a method of the invention, the temperature T₂ of the (influent) draw solution stream (11) is higher than the temperature T₁ of the (influent) feed solution stream (10) comprising water (i.e. T₂ > T₁), such that the temperature T₃ of the formed diluted draw solution stream (12) is lower than temperature T₂ (i.e. T₂ > T₃), and the temperature T₃ of the formed diluted draw solution stream (12) is higher than (or close to) temperature T₁ (due to heat exchange between the filtered (purified) water and the draw solution stream (11) during their mixing in the forward osmosis unit (2) and conductive heat transfer through the forward osmosis membrane (3)), i.e. T₃ > T₁ or T₃ ≈ T₁.

The draw solution (11) is thus cooled down by mixing it with the filtered (purified) water. In other words, the (influent) draw solution stream (11) is cooled down (to the temperature T₃) by mixing (combining) said stream (11) with the filtered (purified) water having temperature T₁ of the (influent) feed solution stream (10), the temperature T₁ being lower than the temperature T₂ of the (influent) draw solution stream (11)). Next to the cooling down by this mixing, conductive heat transfer through the forward osmosis membrane (3) also contributes to cooling down of the draw solution (11).

In a method of the invention, (effluent) residual (non-filtered) feed solution stream (25), comprising pollutants and remaining water not having passed through the semipermeable membrane (3) to the draw side (5), exits the feed side (4) of the semipermeable membrane (3) through feed side outlet (7) (flowing back to nature).

Due to the heat exchange in the forward osmosis unit (2), the residual (non-filtered) feed solution stream (25) has a temperature T₇ being lower or equal to temperature T₂ of the (influent) draw solution stream (11)) and being higher than temperature T₁ of the (influent) feed solution stream (10) (i.e. T₂ ≥ T₇ > T₁).

In a method of the invention, the diluted draw solution stream (12) (produced at draw side (5)) exits the draw side (5) of the semipermeable membrane (3) through draw side outlet (9). The diluted draw solution stream (12) then flows through the system (1) whereby the stream (12) has a reduced temperature T₃ (compared to the temperature T₂ of the (influent) draw solution stream (11)).

In a method of the invention, at least one solar panel (13) is provided, said solar panel (13) comprising a heat exchange tubing system (14) being in communication with the draw side (5), and said solar panel (13) having a (fourth) temperature T₄ being higher than the temperature T₃.

Advantageously, the solar panel temperature T₄ is up to (about) 50 °C or more.

More advantageously, the solar panel temperature T₄ is comprised between (about) 70 °C and (about) 80 °C.

In the present invention, the diluted draw solution stream (12) with lower temperature T₃ than temperature T₂ of the (influent) draw solution stream (11) is passed (or pumped) into the heat exchange tubing system (14) such that the solar panel (13) is cooled down to a (fifth) temperature T₅ and the diluted draw solution stream (12) is heated, thereby forming a heated draw solution stream (22) having a (sixth) temperature T₆.

In other words, due to heat exchange in the heat exchange tubing system (14), the diluted draw solution is heated up to temperature T₆ (forming a heated draw solution stream (22)) while the solar panel is cooled down to temperature T₅. Temperature T₆ is higher than temperature T₃ of the diluted draw solution stream (12), and temperature T₅ is lower than the (initial) temperature T₄ of the solar panel (13) (i.e. temperature T₄ before cooling the solar panel).

The diluted draw solution stream (12) is passed (or pumped) into the heat exchange tubing system (14) through inlet (15). The heated draw solution stream (22) exits the heat exchange tubing system (14) through outlet (16).

Without cooling system, the electricity production efficiency (or photoelectric conversion efficiency) from a solar panel decreases from 14% to around 9%. However, with the method of the invention, the electricity production efficiency of the solar panel is maintained or even enhanced (increased).

In the present invention, the forward osmosis unit (2) is thus indirectly used for cooling down the solar panel (13) by transferring heat from a feed solution stream (10) via the forward osmosis unit (2) to a diluted draw solution stream (12) and from said diluted draw solution stream (12) to the solar panel (13). By said cooling down, the solar panel will generate more (electrical and thermal) energy and it will work more efficiently, thereby increasing its energy output (compared to conventional solar panels without being cooled).

Furthermore, the increase in temperature of the heated draw solution (22) (after heat exchange with the solar panels) provides a possibility to separate, in a next step, the pure (or purified, or filtered) water from the draw solution.

Therefore, in a method of the invention, the heated draw solution stream (22) is passed into a separation unit (17) such that said stream (22) is separated into a stream of purified water (24) and a stream of recovered (or reclaimed) draw solution (23), said stream (23) having the temperature T₂.

The heated draw solution stream (22) is passed into a separation unit (17) through inlet (18).

Advantageously, in the method of the present invention, the separation is based on the change in physical and/or chemical properties of the draw solute in the draw solution (11).

Advantageously, the draw solute in the draw solution stream (11) comprises a temperature sensitive hydrogel (or temperature sensitive copolymer).

More advantageously, the hydrogel is a polyaminoacid derivative.

Even more advantageously, the hydrogel comprises poly(*N*-iso-propylacrylamide) (PNIPAAm), Poly(*N*,*N*-diethylacrylamide) (PDEAAm), or a combination thereof.

Preferably, in a method of the invention, the hydrogel concentration in the draw solution stream (11) is comprised between (about) 10 wt% and (about) 70 wt% (with wt% being the percentage by weight hydrogel in draw solution stream (11)).

Increasing the temperature of the solution comprising the hydrogel to (about) 30°C or above, the hydrogel becomes more hydrophobic (i.e. changes from being hydrophilic to become more hydrophobic).

Therefore, in a method of the invention, due to the increased temperature T₆ of the heated draw solution (22) (which has water mixed therewith), the hydrogel becomes (more) hydrophobic and hence the pure (or purified) water can (easily) be separated from the solution.

Advantageously, the separation of the heated draw solution stream (22) is performed using a settling process, or using a microfiltration membrane, a nanofiltration membrane, or an ultrafiltration membrane (or in other words the heated draw solution stream (22) is separated by settling, or by microfiltration, nanofiltration, or ultrafiltration).

Advantageously, separation of the heated draw solution stream by settling (or by using a settling process) comprises using a means for settling, such as a settling tank, a plate separator, or the like.

More advantageously, the separation is performed using an ultrafiltration membrane (i.e. the heated draw solution stream (22) is separated by ultrafiltration).

Alternatively, the separation is performed by water evaporation.

Advantageously, in the separation unit (17), the stream of heated draw solution (22) is further heated so as to evaporate (or vaporize) water from said stream (22) passing through the separation unit (17) (for separating said stream (22) into a stream of purified water (24) and a stream of recovered draw solution (23)).

More advantageously, further heating the stream of heated draw solution (22) is performed by using a heat pump or another solar panel (further to the at least one solar panel (13) already provided in the system (1)).

Alternatively, the thermal energy and/or the electrical energy provided by the at least one solar panel (13) itself is used for further heating the stream of heated draw solution (22) so as to evaporate (or vaporize) water from the stream of heated draw solution (22) passing through the separation unit (17).

In a method of the invention, the stream of recovered draw solution (23) exits the separation unit through second outlet (20). A stream of purified water (24) exits the separation unit through first outlet (19).

The stream of recovered draw solution (23) (having temperature T₂) is passed (or pumped) to the (inlet (8) of) draw side (5) of the semipermeable membrane (3) to be recycled (for re-use as a draw solution (11), starting a new cycle of the method of the invention).

Performing the method of the invention, a stream of purified water (24) is generated and a stream of recovered draw solution (23) (being separated from the purified water in separation unit (17)) is recycled to the draw side (5) of the semipermeable membrane (3).

As such, performing the method of the present invention (where forward osmosis is coupled to cooling down a solar panel by heat exchange) results in solar panels producing higher electrical output (compared to solar panels without being cooled), while the exchange (during cooling of the PV panel) of a large amount of thermal energy (from the PV panel) is further used for purifying water.

From the description above, it follows that the present invention thus provides an improved method for purifying water from a stream of (contaminated) feed solution and a related system, which overcomes the disadvantages of prior art methods and systems.

The present invention provides a method for increasing solar panel efficiency while also purifying water from a stream of (contaminated) feed solution (comprising water).

The method of the invention thus allows to link an efficient production of electricity provided by solar panels to (osmotic) water purification.

Performing the method of the invention improves the solar energy (both photovoltaic and thermo) utilization rate together with water production efficiency, by using a "temperature window" (or heat exchange) between (components of) the system (1) and a stream of (contaminated) feed solution (comprising water).

More particularly, the present invention provides a method for producing purified water with very low energy consumption (compared to prior art methods and systems), due to the heat exchange between the filtered (purified) water and the draw solution stream (11) during the mixing (or combining) of the filtered (purified) water with said stream (11) (in the forward osmosis unit (2)) (as well as conductive heat transfer through the forward osmosis membrane (3)) and due to the heat exchange between the solar panel and the diluted draw solution stream (12) passing through the heat exchange tubing system (14) (allowing to separate, in a next step, the purified water from the draw solution).

The present invention thus provides a more efficient method and system compared to prior art methods and systems.

Advantageously, performing the method of the invention, potable water is produced with very low energy consumption compared to prior art methods and systems.

The method can be performed in fields involving water-treatment processing of all types including waste water, groundwater, seawater desalination, and the like.

The method can be performed for producing potable water, even in remote areas.

## Claims

1. A method for purifying water, the method comprising:
- providing a feed solution stream (10) comprising water, having a first osmotic pressure and a temperature T₁ on a feed side (4) of a semipermeable membrane (3);
- providing a draw solution stream (11) comprising a draw solute, having a second osmotic pressure and a temperature T₂ on a draw side (5) of the semipermeable membrane (3), the second osmotic pressure being higher than the first osmotic pressure;
- passing water through the semipermeable membrane (3) to the draw side (5) so as to mix the water with the draw solution stream (11) to produce a diluted draw solution stream (12) having a temperature T₃;
**characterized in that**
- the temperature T₂ of the draw solution stream (11) is higher than the temperature T₁ of the feed solution stream (10), such that the temperature T₃ of the diluted draw solution stream (12) is lower than temperature T₂;
- at least one solar panel (13) is provided, said solar panel (13) comprising a heat exchange tubing system (14) being in communication with the draw side (5) and said solar panel (13) having a temperature T₄ being higher than the temperature T₃;
- the diluted draw solution stream (12) is passed into the heat exchange tubing system (14) such that the solar panel (13) is cooled down to a temperature T₅ and the diluted draw solution stream (12) is heated, thereby forming a heated draw solution stream (22) having a temperature T₆;
- the heated draw solution stream (22) is passed into a separation unit (17) such that said stream (22) is separated into a stream of purified water (24) and a stream of recovered draw solution (23);
- the stream of recovered draw solution (23) is passed to the draw side (5) of the semipermeable membrane (3) to be recycled,
wherein solar panel (13) is a photovoltaic panel.

2. The method according to claim 1, wherein the feed solution stream (10) comprises water from a sea, lake, river, channel, solar pond, reservoir, underground, or waste water.

3. The method according to claim 1 or 2, wherein the temperature T₁ of the feed solution stream (10) is comprised between 0°C and 50°C.

4. The method of any one of the preceding claims, wherein the solar panel temperature T₄ is up to 50 °C or more.

5. The method of any one of the preceding claims, wherein the draw solute in the draw solution stream (11) comprises a temperature sensitive hydrogel.

6. The method of claim 5, wherein the hydrogel comprises poly(*N*-iso-propylacrylamide) (PNIPAAm), Poly(*N*,*N*-diethylacrylamide) (PDEAAm), or a combination thereof.

7. The method of any one of the preceding claims, wherein the heated draw solution stream (22) is separated by settling, or by microfiltration, nanofiltration, or ultrafiltration.

8. The method of any of claim 1 to 6, wherein the heated draw solution stream (22) is separated by water evaporation.

9. The method of any of claim 1 to 4, wherein the solute in the draw solution stream (11) comprises NH₄HCO₃.

10. A system (1) for purifying water, the system (1) comprising:
a forward osmosis unit (2) comprising a semipermeable membrane (3) comprising a feed side (4) and a draw side (5), said feed and draw side (4,5) having an inlet (6,8) and an outlet (7,9), said feed side (4) being configured for receiving a feed solution stream (10) comprising water, said draw side (5) being configured for receiving a draw solution stream (11) comprising a draw solute, wherein the semipermeable membrane (3) is configured to pass water from the feed solution stream (10) to the draw side (5) to produce a diluted draw solution stream (12);
**characterized in that** the system (1) comprises at least one solar panel (13) comprising a heat exchange tubing system (14), said tubing system (14) having an inlet (15) and an outlet (16), said inlet (15) being in communication with the draw side outlet (9) of the forward osmosis unit (2), the heat exchange tubing system (14) being configured for cooling down the solar panel (13) and heating the diluted draw solution stream (12) passing through the heat exchange tubing system (14) so as to form a heated draw solution stream (22); and a separation unit (17) being configured for separating the stream of heated draw solution (22) passing through the separation unit (17), said separation unit (17) having an inlet (18) and a first and second outlet (19,20), the separation unit inlet (18) being in communication with the heat exchange tubing system outlet (16), the separation unit first outlet (19) being configured for exiting a stream of purified water (24) from the system (1), the separation unit second outlet (20) being in communication with the draw side inlet (8) of the forward osmosis unit (2) in order to recycle a stream of recovered draw solution (23), said stream (23) being separated from the purified water in separation unit (17),
wherein solar panel (13) is a photovoltaic panel.

11. The system of claim 10, wherein the heat exchange tubing system (14) is attached underneath the at least one solar panel (13).

12. The system of claim 10 or 11, comprising at least one pump being adapted for pumping the draw solution comprising the draw solute through the system (1).

13. The system of any of claim 10 to 12, wherein separation unit (17) comprises a means for settling, or a microfiltration membrane, a nanofiltration membrane, or an ultrafiltration membrane.

14. The system of any of claim 10 to 12, wherein the separation unit (17) comprises a means for further heating the stream of heated draw solution (22) so as to evaporate water from said stream (22) passing through the separation unit (17).

15. Use of the system of any of claim 10 to 14 for producing potable water.

## Patentansprüche

1. Ein Verfahren zum Reinigen von Wasser, wobei das Verfahren Folgendes umfasst:
- Bereitstellen eines Zufuhrlösungsstroms (10), umfassend Wasser, das einen ersten osmotischen Druck und eine Temperatur T₁ auf einer Zufuhrseite (4) einer halbdurchlässigen Membran (3) aufweist;
- Bereitstellen eines Zuglösungsstroms (11), umfassend eine Zugsubstanz, das einen zweiten osmotischen Druck und eine Temperatur T₂ auf einer Zugseite (5) der halbdurchlässigen Membran (3) aufweist, wobei der zweite osmotische Druck höher als der erste osmotische Druck ist;
- Leiten von Wasser durch die halbdurchlässige Membran (3) an die Zugseite (5), um das Wasser mit dem Zuglösungsstrom (11) zu mischen, um einen verdünnten Zuglösungsstrom (12) zu erzeugen, der eine Temperatur T₃ aufweist;
**dadurch gekennzeichnet, dass**
- die Temperatur T₂ des Zuglösungsstroms (11) höher als die Temperatur T₁ des Zufuhrlösungsstroms (10) ist, so dass die Temperatur T₃ des verdünnten Zuglösungsstroms (12) niedriger als die Temperatur T₂ ist;
- mindestens ein Solarpaneel (13) bereitgestellt ist, wobei das besagte Solarpaneel (13) ein Wärmetauschrohrleitungssystem (14) umfasst, das mit der Zugseite (5) in Kommunikation ist, und wobei das Solarpaneel (13) eine Temperatur T₄ aufweist, die höher als die Temperatur T₃ ist;
- der verdünnte Zuglösungsstrom (12) in das Wärmetauschrohrleitungsystem (14) geleitet wird, so dass das Solarpaneel (13) auf eine Temperatur T₅ abgekühlt und der verdünnte Zuglösungsstrom (12) erwärmt wird, wodurch ein erwärmter Zuglösungsstrom (22) gebildet wird, der eine Temperatur T₆ aufweist;
- der erwärmte Zuglösungsstrom (22) in eine Trenneinheit (17) geleitet wird, so dass der besagte Strom (22) in einen Strom aus gereinigtem Wasser (24) und einen Strom aus wiedergewonnener Zuglösung (23) getrennt wird;
- der Strom aus wiedergewonnener Zuglösung (23) auf die Zugseite (5) der halbdurchlässigen Membran (3), die recycelt werden soll, geleitet wird,
wobei das Solarpaneel (13) ein photovoltaisches Paneel ist.

2. Das Verfahren nach Anspruch 1, wobei der Zufuhrlösungsstrom (10) Wasser aus einem Meer, einem See, einem Fluss, einem Kanal, einem Solarbecken, einem Stausee, dem Untergrund oder aus Abwasser umfasst.

3. Das Verfahren nach Anspruch 1 oder 2, wobei die Temperatur T₁ des Zufuhrlösungsstroms (10) im Bereich zwischen 0 °C und 50 °C liegt.

4. Das Verfahren nach irgendeinem der vorhergehenden Ansprüche, wobei die Temperatur T₄ des Solarpaneels bis zu 50 °C oder mehr beträgt.

5. Das Verfahren nach irgendeinem der vorhergehenden Ansprüche, wobei die Zugsubstanz im Zuglösungsstrom (11) ein temperaturempfindliches Hydrogel umfasst.

6. Das Verfahren nach Anspruch 5, wobei das Hydrogel Poly(N-iso-propylacrylamid) (PNI PAAm), Poly(N,N-diethylacrylamid) (PDEAAm) oder einer Kombination davon umfasst.

7. Das Verfahren nach irgendeinem der vorhergehenden Ansprüche, wobei der erwärmte Zuglösungsstrom (22) durch Absetzen oder durch Mikrofiltration, Nanofiltration oder Ultrafiltration getrennt wird.

8. Das Verfahren nach irgendeinem der Ansprüche 1 bis 6, wobei der erwärmte Zuglösungsstrom (22) durch Wasserverdampfung getrennt wird.

9. Das Verfahren nach einem der Ansprüche 1 bis 4, wobei die Substanz im Zuglösungsstrom (11) NH₄HCO₃ umfasst.

10. Ein System (1) zum Reinigen von Wasser, wobei das System (1) Folgendes umfasst:
eine Vorwärtsosmoseeinheit (2), umfassend eine halbdurchlässige Membran (3), umfassend eine Zufuhrseite (4) und eine Zugseite (5), wobei die besagte Zufuhr- und die besagte Zugseite (4, 5) einen Einlass (6, 8) und einen Auslass (7, 9) aufweisen, wobei die besagte Zufuhrseite (4) konfiguriert ist, um einen Zufuhrlösungsstrom (10), umfassend Wasser, zu erhalten, wobei die besagte Zugseite (5) konfiguriert ist, um einen Zuglösungsstrom (11), umfassend eine Zugsubstanz, zu erhalten, wobei die halbdurchlässige Membran (3) konfiguriert ist, um Wasser vom Zufuhrlösungsstrom (10) an die Zugseite (5) zu leiten, um einen verdünnten Zuglösungsstrom (12) zu erzeugen;
**dadurch gekennzeichnet, dass** das System (1) mindestens ein Solarpaneel (13) umfasst, umfassend ein Wärmetauschrohrleitungssystem (14), wobei das besagte Rohrleitungssystem (14) einen Einlass (15) und einen Auslass (16) aufweist, wobei der besagte Einlass (15) in Kommunikation mit dem Zugseitenauslass (9) der Vorwärtsosmoseeinheit (2) ist, wobei das Wärmetauschrohrleitungssystem (14) konfiguriert ist, um das Solarpaneel (13) abzukühlen und den verdünnten Zuglösungsstrom (12) zu erwärmen, der durch das Wärmetauschrohrleitungssystem (14) fließt, um einen erwärmten Zuglösungsstrom (22) zu bilden; und wobei eine Trenneinheit (17) konfiguriert ist, um den Strom von erwärmter Zuglösung (22) zu trennen, der durch die Trenneinheit (17) verläuft, wobei die besagte Trenneinheit (17) einen Einlass (18) und einen ersten und zweiten Auslass (19, 20) aufweist, wobei der Einlass der Trenneinheit (18) in Kommunikation mit dem Auslass des Wärmetauschrohrleitungssystem (16) steht, wobei der erste Auslass der Trenneinheit (19) konfiguriert ist, um einen Strom aus gereinigtem Wasser (24) aus dem System (1) abzulassen, wobei der zweite Auslass (20) der Trenneinheit in Kommunikation mit dem Zugseiteneinlass (8) der Vorwärtsosmoseeinheit (2) ist, um einen Strom von wiedergewonnener Zuglösung (23) zu recyceln, wobei der besagte Strom (23) in der Trenneinheit (17) vom gereinigten Wasser getrennt wird,
wobei das Solarpaneel (13) ein photovoltaisches Paneel ist.

11. Das System nach Anspruch 10, wobei das Wärmetauschrohrleitungssystem (14) unter dem mindestens einen Solarpaneel (13) befestigt ist.

12. Das System nach Anspruch 10 oder 11, umfassend mindestens eine Pumpe, die ausgelegt ist, um die Zuglösung, umfassend die Zugsubstanz, durch das System (1) zu pumpen.

13. Das System nach irgendeinem der Ansprüche 10 bis 12, wobei die Trenneinheit (17) ein Mittel zum Absetzen oder eine Mikrofiltrationsmembran, eine Nanofiltrationsmembran oder eine Ultrafiltrationsmembran umfasst.

14. Das System nach irgendeinem der Ansprüche 10 bis 12, wobei die Trenneinheit (17) ein Mittel umfasst, um weiter den Strom von erwärmter Zuglösung (22) zu erwärmen, um Wasser von dem besagten Strom (22) zu verdampfen, der durch die Trenneinheit (17) läuft.

15. Verwendung des Systems nach einem der Ansprüche 10 bis 14 zur Erzeugung von Trinkwasser.

## Revendications

1. Procédé de purification d'eau, le procédé comprenant :
- la fourniture d'un courant de solution d'alimentation (10) comprenant de l'eau, ayant une première pression osmotique et une température T₁ d'un côté alimentation (4) d'une membrane semi-perméable (3) ;
- la fourniture d'un courant de solution d'extraction (11) comprenant un soluté d'extraction, ayant une seconde pression osmotique et une température T₂ d'un côté extraction (5) de la membrane semi-perméable (3), la seconde pression osmotique étant supérieure à la première pression osmotique ;
- le passage d'eau à travers la membrane semi-perméable (3) au côté extraction (5) de manière à mélanger l'eau avec le courant de solution d'extraction (11) pour produire un courant de solution d'extraction dilué (12) ayant une température T₃ ;
**caractérisé en ce que**
- la température T₂ du courant de solution d'extraction (11) est supérieure à la température T₁ du courant de solution d'alimentation (10), de sorte que la température T₃ du courant de solution d'extraction dilué (12) est inférieure à la température T₂ ;
- au moins un panneau solaire (13) est prévu, ledit panneau solaire (13) comprenant un système de tubes d'échange de chaleur (14) qui sont en communication avec le côté extraction (5) et ledit panneau solaire (13) ayant une température T₄ qui est supérieure à la température T₃ ;
- le courant de solution d'extraction dilué (12) est passé dans le système de tubes d'échange de chaleur (14) de sorte que le panneau solaire (13) est refroidi à une température T₅ et que le courant de solution d'extraction dilué (12) est chauffé, formant ainsi un courant de solution d'extraction chauffé (22) ayant une température T₆ ;
- le courant de solution d'extraction chauffé (22) passe dans une unité de séparation (17) de sorte que ledit courant (22) est séparé en un courant d'eau purifiée (24) et un courant de solution d'extraction récupéré (23) ;
- le courant de solution d'extraction récupéré (23) passe du côté extraction (5) de la membrane semi-perméable (3) pour être recyclé,
dans lequel le panneau solaire (13) est un panneau photovoltaïque.

2. Procédé selon la revendication 1, dans lequel le courant de solution d'alimentation (10) comprend de l'eau provenant d'une mer, d'un lac, d'une rivière, d'un canal, d'un étang solaire, d'un réservoir, d'un sous-sol, ou d'eaux usées.

3. Procédé selon les revendications 1 ou 2, dans lequel la température T₁ du courant de solution d'alimentation (10) est comprise entre 0° C et 50° C.

4. Procédé selon l'une quelconque des revendications précédentes, dans lequel la température T₄ du panneau solaire atteint 50° C ou plus.

5. Procédé selon l'une quelconque des revendications précédentes, dans lequel le soluté d'extraction du courant de solution d'extraction (11) comprend un hydrogel sensible à la température.

6. Procédé selon la revendication 5, dans lequel l'hydrogel comprend du poly (N-iso-propylacrylamide) (PNIPAAm), du poly(N,N-diéthylacrylamide) (PDEAAm), ou un mélange de ceux-ci.

7. Procédé selon l'une quelconque des revendications précédentes, dans lequel le courant de solution d'extraction chauffé (22) est séparé par sédimentation, ou par microfiltration, nanofiltration ou ultrafiltration.

8. Procédé selon l'une quelconque des revendications 1 à 6, dans lequel le courant de solution d'extraction chauffé (22) est séparé par évaporation de l'eau.

9. Procédé selon l'une quelconque des revendications 1 à 4, dans lequel le soluté du courant de solution d'extraction (11) comprend du NH4HC0₃.

10. Système (1) de purification d'eau, le système (1) comprenant :
une unité d'osmose directe (2) comprenant une membrane semi-perméable (3) comprenant un côté alimentation (4) et un côté extraction (5), ledit côté alimentation et côté extraction (4, 5) ayant une entrée (6, 8) et une sortie (7, 9), ledit côté alimentation (4) étant configuré pour recevoir un courant de solution d'alimentation (10) comprenant de l'eau, ledit côté extraction (5) étant configuré pour recevoir un courant de solution d'extraction (11) comprenant un soluté d'extraction, dans lequel la membrane semi-perméable (3) est configurée pour faire passer de l'eau du courant de solution d'alimentation (10) au côté extraction (5) pour produire un courant de solution d'extraction dilué (12) ;
**caractérisé en ce que** le système (1) comprend au moins un panneau solaire (13) comprenant un système de tubes d'échange de chaleur (14), ledit système de tubes (14) ayant une entrée (15) et une sortie (16), ladite entrée (15) étant en communication avec la sortie côté extraction (9) de l'unité d'osmose directe (2), le système de tubes d'échange de chaleur (14) étant configuré pour refroidir le panneau solaire (13) et chauffer le courant de solution d'extraction dilué (12) passant à travers le système de tubes d'échange de chaleur (14) de manière à former un courant de solution d'extraction chauffé (22) ; et une unité de séparation (17) étant configurée pour séparer le courant de solution d'extraction chauffé (22) passant à travers l'unité de séparation (17), ladite unité de séparation (17) ayant une entrée (18) et une première et une seconde sortie (19, 20), l'entrée (18) de l'unité de séparation étant en communication avec le système de tubes d'échange de chaleur (16), la première sortie (19) de l'unité de séparation étant configurée pour faire sortir un courant d'eau purifiée (24) du système (1), la seconde sortie (20) de l'unité de séparation étant en communication avec l'entrée côté extraction (8) de l'unité d'osmose directe (2) afin de recycler un courant de solution d'extraction récupérée (23), ledit courant (23) étant séparé de l'eau purifiée dans l'unité de séparation (17),
dans lequel le panneau solaire (13) est un panneau photovoltaïque.

11. Système selon la revendication 10, dans lequel le système de tubes d'échange de chaleur (14) est fixé sous l'au moins un panneau solaire (13).

12. Système selon les revendications 10 ou 11, comprenant au moins une pompe qui est adaptée pour pomper la solution d'extraction comprenant le soluté d'extraction à travers le système (1).

13. Système selon l'une quelconque des revendications 10 à 12, dans lequel l'unité de séparation (17) comprend des moyens de sédimentation, ou une membrane de microfiltration, une membrane de nanofiltration ou une membrane d'ultrafiltration.

14. Système selon l'une quelconque des revendications 10 à 12, dans lequel l'unité de séparation (17) comprend des moyens permettant de chauffer davantage le courant de solution d'extraction chauffé (22) de manière à faire s'évaporer l'eau dudit courant (22) passant à travers l'unité de séparation (17) .

15. Utilisation du système selon l'une quelconque des revendications 10 à 14 pour produire de l'eau potable.
